# EUROPEAN PATENT SPECIFICATION

(11) **EP 0 425 143 B1**
(45) Date of publication and mention of the grant of the patent: **10.01.1996**
(21) Application number: 90311181.3
(22) Date of filing: 11.10.1990
(51) Int. Cl.: A01N 43/80

(54) **Stabilization of isothiazolones**
Stabilisierung von Isothiazolonen
Stabilisation d'isothiazolones

(30) Priority: 24.10.1989 US 426144
(43) Date of publication of application: 02.05.1991
(73) Proprietor: ROHM AND HAAS COMPANY, Philadelphia Pennsylvania 19105 (US)
(72) Inventor: Law, Andrew Bonar, Newtown, PA 18940 (US); Willingham, Gary Lewis, Glenside, PA 19038 (US)
(74) Representative: Angell, David Whilton

(56) References cited:
- EP-A- 0 147 223
- EP-A- 0 194 146
- US-A- 3 870 795
- US-A- 4 031 055
- US-A- 4 608 183
- US-A- 4 783 221
- US-A- 4 808 407

## Description

This invention relates to the stabilization of isothiazolones with various metal salts.

The use of 3-isothiazolones to control microbial growth in a variety of industrial environments (metal working fluids, cooling tower water, emulsions, plastic film, and the like) has been enhanced by the addition of stabilizers to maintain antimicrobial activity for longer periods of time; typical stabilizer systems include metal nitrates and the like.

U.S.-A-3,870,795 and 4,067,878 teach the stabilization of isothiazolones against chemical decomposition by addition of a metal nitrite or metal nitrate salts, butt teach that other common metal salts, including carbonates, sulfates, chlorates, perchlorates, and chlorides are not as effective as nitrates or nitrites in stabilizing solutions of isothiazolones, such solutions usually being in water or in an hydroxylic solvent and immiscible with solvent-soluble isothiazolones. Salts of organic carboxylic acids of more than six carbon atoms are not taught or considered in these patents.

U.S.-A-4,150,026 and 4,241,214 teach that metal salt complexes of isothiazolones are useful because of their enhanced thermal stability, while retaining biological activity. The metal salts listed do not include salts of organic carboxylic acids of six or more carbon atoms, or complexes of metals with organic-soluble reagents or polymers.

U.S.-A-4,608,183 teaches synergistic microbicidal mixtures of isothiazolones and a metal complex with polyfunctional ligand, where the metal complex itself may be a microbicide. Illustrated specifically is the water-soluble monocopper sodium citrate. It is known to use certain organic stabilizers for isothiazolones, generally for use situations where metal salts may create problems, such as corrosion, coagulation of latices, insolubility in non-aqueous media, interaction with the substrate to be stabilized, and the like.

Formaldehyde or formaldehyde-releasing chemicals are known stabilizers (see U.S.-A-4,165,318 and 4,129,448).

In certain applications, however, it is desirable to avoid addition of organic stabilizers by virtue of their volatility, decomposition under high heat, higher cost, difficulty in handling, potential toxicity, and the like. Formaldehyde is a suspected carcinogen, and it is desirable to reduce the use of formaldehyde or formaldehyde releasing chemicals in applications where contact with human skin of lungs may occur.

Grove, U.S.-A-4,783,221 shows metal salts of organic carboxylic acids containing at least 6 carbon atoms wherein the metal is selected from the group consisting of copper and other transition metals, zinc, antimony, and lead, with an isothiazolone compound, and a solvent/diluent to preserve wood. However there is no suggestion in this disclosure that the metal salts might have any stabilising effect on the isothiazolone.

Our copending European applications Nos. 90305580.4 and 90307007.6 disclose the stabilization of isothiazolone mildewcides in paint compositions by organic zinc and organic copper compounds respectively. There is no disclosure relating either to stabilization by organic salts of any other metals, or to stabilization by organic metal salts in any other loci.

It has therefore become desirable to provide a stabilized isothiazolone which requires only low levels of stabilizer so as to avoid interference with other components in systems in which isothiazolones are used as microbicides.

In one aspect the present invention comprises the use of a copper salt of one or more of : alkyl carboxylic acids from 6 to 20 carbon atoms, cycloalkylcarboxylic acids of from 6 to 10 carbon atoms, or aromatic carboxylic acids of from 6 to 11 carbon atoms, as a stabilizer for a 3-isothiazolone of the formula: 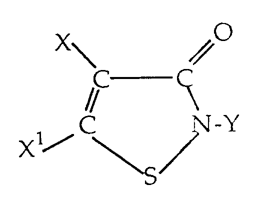
wherein
Y is a (C₁-C₁₈)alkyl or (C₃-C₁₂), preferably (C₅-C₈), cycloalkyl each optionally substituted with one or more of hydroxy, halo, cyano, alkylamino, dialkylamine, arylamino, carboxy, carbalkoxy, alkoxy, aryloxy, alkylthio, haloalkoxy, cycloalkylamino, carbamoxy, or isothiazolonyl; an unsubstituted or halo-substituted (C₂-C₈), preferably (C₂-C₄) alkenyl or alkynyl; a (C₇-C₁₀)aralkyl optionally substituted with one or more of halogen, (C₁-C₄)alkyl or (C₁-C₄)alkoxy; or an aryl optionally substituted with one or more of halogen, nitro, (C₁-C₄)alkyl, (C₁-C₄)alkyl-acylamino, carb(C₁-C₄)alkoxy or sulfamyl; and
X and X₁ are each independently hydrogen, chloro, or methyl; in a metal working fluid comprising at least one component selected from the group consisting of an alkanolamine, a petroleum sulfonate emulsifier, a boric acid ester or boric acid amide, a corrosion inhibitor, and a fatty acid;
The 3-isothiazolones of interest include those disclosed in U.S.-A-3,523,121 and 3,761,488 as represented by the following formula: 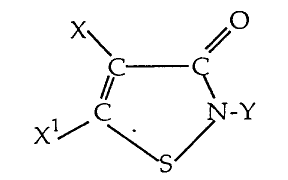
wherein Y is an alkyl or substituted alkyl of 1 to 18 carbon atoms, preferably from 4 to 10 carbon atoms; an unsubstituted or halogen substituted alkenyl or alkynyl of 2 to 8 carbon atoms, preferably from 2 to 4 carbon atoms; a cycloalkyl or substituted cycloalkyl of 3 to 12 carbon atoms, preferably from 5 to 8 carbon atoms; an aralkyl or halogen-, lower alkyl-, or lower alkoxy-substituted aralkyl of up to 10 carbon atoms; or an aryl or halogen-, lower alkyl-, or lower alkoxy-substituted aryl of up to 10 carbon atoms; and X and X¹ are hydrogen, halogen, or a (C₁ - C₄) alkyl.

Representative Y substituents include methyl, ethyl, propyl, isopropyl, butyl, hexyl, octyl, cyclohexyl, benzyl, 3,4-dichlorophenyl, 4-methoxybenzyl, 4-chlorobenzyl, 3,4-dichlorophenyl, 4-methoxyphenyl, 4-chlorophenyl, phenethyl, 2-(4-chlorophenyl)ethyl, hydroxymethyl, chloromethyl, chloropropyl, hydrogen, and the like.

Where the expression "lower" is employed in conjunction with terms, such as alkyl, alkoxy, etc., it is intended to indicate that the alkyl or alkyl portion thereof has 1 to 4 carbon atoms.

By a substituted alkyl group is meant an alkyl group having one or more of its hydrogen atoms replaced by another substituted group. Examples of the substituted alkyl groups which characterize 3-isothiazolones of this invention include hydroxyalkyl, haloalkyl, cyanoalkyl, alkylaminoalkyl, dialkylaminoalkyl, arylaminoalkyl, carboxyalkyl, carbalkoxyalkyl, alkoxyalkyl, aryloxyalkyl, alkylthioalkyl, arylthioalkyl, haloalkoxyalkyl, cycloalkylaminoalkyl, such as morpholinoalkyl, piperidinoalkyl, pyrrolidonylalkyl, and the like, carbamoxyalkyl, alkenyl, halolkenyl, alkynyl, haloalkynyl, isothiazolonylalkyl, and the like.

By a substituted aralkyl group is meant an aralkyl group having one or more of the hydrogen atoms on either the aryl ring or the alkyl chain replaced by another substituent group. Examples of the substituent aralkyl groups which characterize 3-isothiazolones of this invention include halogen-, lower alkyl-, or lower alkoxy-substituted aralkyl groups, and the like.

By a substituted aryl group is meant an aryl group, such as benzene, naphthalene, or pyridine, having one or more of the hydrogen atoms on the aryl ring replaced by another substituent group. Examples of such substitutent groups include halogen, nitro, lower alkyl, lower alkylacrylamino, lower carbalkoxy, sulfamyl, and the like.

Preferred isothiazolones are 5-chloro-2-methyl-3-isothiazolone, 2-methyl-3-isothiazolone, 2-n-octyl-3-isothiazolone, and 4,5-dichloro-2-octyl-3-isothiazolone. It has been found that a small number of chlorinated isothiazolones are not stabilized by the metal salt compounds used in this invention.

Another aspect of the invention provides a method for preventing or inhibiting the growth of bacteria in a locus as defined above, comprising incorporating therewith in an amount sufficient to adversely affect said growth, a microbicidal composition comprising one or more 3-isothiazolones of the formula 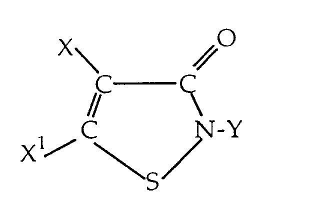
as defined in Claim 1; a copper salt as defined in Claim 1; and optionally a solvent. The invention also provides in a further aspect a method of stabilizing a 3-isothiazolone in one of said loci by incorporating therewith as effective amount of one or more of said salts.

An important area requiring protection against microbial growth is metal working fluids (MWF). Metal working fluids are proprietary combinations of chemicals, which may contain such ingredients as are listed, but are not limited to such : alkanolamines, petroleum sulfonate surfactants, oils (naphthenic, paraffinic, etc.), chlorinated paraffins and fatty esters, sulfurized fatty compounds, phosphate esters, fatty acids and their amine salts, glycols, polyglycols, boric acid esters and amides. They are sold as concentrates to be dilutted in use to 1-10% ingredients in water. They are utilized in the milling, machining, drilling, and other processing technologies for fabricating metal for the purposes of lubricating, cooling, preventing surface corrosion, and the like. Because metal working fluids are recycled and stored, the growth of microorganisms is favored. Isothiazolones have been found effective in preventing the growth of such organisms. Certain of the components in the metal working fluids will tend to destroy the isothiazolone and so remove its microbicidal protective activity, so that stabilizers for the isothiazolone against such degradation are desirable.

It is known in the art that the performance of microbicides can occasionally be synergistically enhanced by combination with one or more other microbicides, although such synergism is not readily predictable. There may also be other reasons, such as cost, solubility, protection against more than one degradative species, and the like, to combine two microbicides even in the absence of synergism.

Among the stabilizing compounds useful in the compositions of this invention are salts of organic carboxylic acids which are water soluble or water dispersible. A preferred compound is copper alkanoate (mixture of about (C₇-C₁₃) alkyl carboxylates).

Solvents may be used to dissolve the isothiazolones and may be any organic solvent which dissolves the isothiazolones, is compatible with the proposed end use, does not destabilize the isothiazolone, and does not react with the metal salt to eliminate its stabilizing action. Hydroxylic solvents, for example, polyols, such as glycols, monoethers of glycols, alcohols, and the like, may be used. An hydroxylic coalescent, such as trimethyl-1,3-pentanediol monoisobutyrate also may be used. Trimethyl-1,3-pentanediol monoisobutyrate is the designation Eastman Chemical uses for Texanol. In certain formulations, hydrocarbons, either aliphatic or aromatic, are useful solvents. Typical solvents are propylene glycol, dipropylene glycol monoethyl ether, xylene, mineral spirits, and the like. Solvents may be used in admixture as long as the metal salt remains soluble or is well dispersed enough so as to be added conveniently and uniformly to the test formulation.

The amounts of stabilizing metal salt compounds employed will vary depending on use conditions and concentrations of the isothiazolone in the composition. Generally, a microbicidal composition according to this invention which contains a solvent may contain from 0.01 to 50 parts isothiazolone, from 0.0001 to 10 parts metal salt, and from 40 to 98.9899 parts solvent. Preferred ranges are 1 to 25 parts isothiazolone, 0.1 to 10 parts metal salt, and 65 to 98.9 parts solvent. When solvent is not present, the relative proportions may be 0.01 to 99.9899 (preferably 5 to 40) parts isothiazolone, and 0.0001 to 99.99 (preferably 60 to 95) parts metal salt. In concentrated solutions, effective amounts of metal salt relative to isothiazolone are in the ratios of from about 1:50 to about 50:1. Obviously higher amounts may be used, but at additional cost. At high levels of dilution of the isothiazolone (such as from about 0.1 ppm to about 10 percent isothiazolone in a solvent), the ratio of stabilizer to isothiazolone can range from about 1:7 to about 50:1. The stabilization advantages of the metal salts are noted even when the isothiazolone contains other salt stabilizers such as those set forth in U.S. -A-3,870,795; 4,067,878; 4,150,026 and 4,241,214.

Other known microbicides may be combined advantageously with the stabilized isothiazolones of this invention.

The following examples further illustrate the invention. All parts and percentages are by weight and all temperatures in degrees Centigrade, unless otherwise stated. Methods for quantitative determination of the isothiazolones in the following examples are described in detail in "Kathon 886 MW Microbicide and Kathon 893 MW Fungicide: Analysis in Metal Working Fluids by High-Performance Liquid Chromatography," 1988, Rohm and Haas Company.

### EXAMPLE 1

### STABILITY STUDY

This example demonstrates the stabilizing effect of metal salts for isothiazolones added to several different metal working fluids (MWF). MWF concentrates A through C were "semi-synthetic" types having about 10 to 15% naphthenic/paraffinic oil, about 50% water, about 15% emulsifying agents, and about 15% of pH adjusting amines, anticorrosive agents, and EP (extreme pressure) agents. MWF concentrate D was a synthetic type having about 70% water, 15% long chain non-ionic surfactants or esters, 15% phosphate or amine carboxylate corrosion inhibitor, pH adjusting amines, and EP agents. MWF concentrate E was a soluble type having about 50 to 75% naphthenic/paraffinic oil, about 10-20% emulsifying agents, and about 15% pH adjusting amines, anticorrosive agents and EP agents.

The test method is as follows: Into a glass vial in the following order were placed: a) 5 parts by weight of the metal working fluid (MWF) concentrate diluted in water, b) 5 parts of the stabilizer in solution or dispersion, c) 5 parts water, d) 5 parts of an aqueous solution containing 80 ppm active ingredient (a.i.), prepared by dilution of a 14.4% aqueous solution of an approximately 75/25 mixture (designated IT-MIX) of 5-chloro-2-methyl-3-isothiazolone and 2-methyl-3-isothiazolone, the former being considered the active ingredient for these purposes; also present was 9.2 weight percent magnesium chloride and 15.7% magnesium nitrate. Thus the final mixture contained 3-5% of the MWF, 20 ppm active ingredient of the isothiazolone, and 0 (control) to 40 ppm of the stabilizer. The vials were then capped, stored at ambient room temperature in a closed cabinet for a designated time, filtered through a 0.45 micron filter into another vial and analyzed the same day. The relative concentration of the active ingredient was determined by reverse phase high pressure liquid chromatography.

Cupric alkanoate is supplied as a 10% solution in xylene.

**TABLE 1**

| COMPARISON OF SEVERAL COPPER SALTS IN FOUR MWF SYSTEMS AFTER THREE DAYS AT ROOM TEMPERATURE | | | | | |
|---|---|---|---|---|---|
| Stabilizer | Stabilizer level (ppm) | % AI remaining | | | |
| | | MWF-A | MWF-B | MWF-C | MWF-D |
| None | 0 | 43 | 0 | 8 | 55 |
| Cu Alkanoate | 20 | 59 | 89 | 97 | 67 |

Original system contained 15 ppm 5-chloro-2-methyl-3-isothiazolone (AI) with 3% MWF concentrate A, or 5% MWF concentrate B, or 4% MWF concentrate C, or 4% MWF concentrate D.

## Claims

1. The use of a copper salt of one or more of : alkyl carboxylic acids from 6 to 20 carbon atoms, cycloalkylcarboxylic acids of from 6 to 10 carbon atoms, or aromatic carboxylic acids of from 6 to 11 carbon atoms, as a stabilizer for a 3-isothiazolone of the formula: 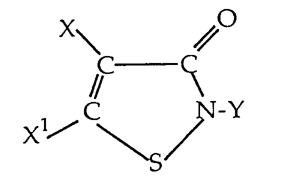 wherein
Y is a (C₁-C₁₈)alkyl or (C₃-C₁₂), preferably (C₅-C₈), cycloalkyl each optionally substituted with one or more of hydroxy, halo, cyano, alkylamino, dialkylamine, arylamino, carboxy, carbalkoxy, alkoxy, aryloxy, alkylthio, haloalkoxy, cycloalkylamino, carbamoxy, or isothiazolonyl; an unsubstituted or halo-substituted (C₂-C₈), preferably (C₂-C₄) alkenyl or alkynyl; a (C₇-C₁₀)aralkyl optionally substituted with one or more of halogen, (C₁-C₄)alkyl or (C₁-C₄)alkoxy; or an aryl optionally substituted with one or more of halogen, nitro, (C₁-C₄)alkyl, (C₁-C₄)alkyl-acylamino, carb(C₁-C₄)alkoxy or sulfamyl; and
X and X₁ are each independently hydrogen, chloro, or methyl; in a metal working fluid comprising at least one component selected from the group consisting of an alkanolamine, a petroleum sulfonate emulsifier, a boric acid ester or boric acid amide, a corrosion inhibitor, and a fatty acid;

2. Use according to Claim 1 wherein the copper salt is a salt of hexanoic, heptanoic, octanoic, decanoic, dodecanoic, 2-ethyl hexanoic, alkanoic (mixture of about (C₇ - C₁₃) alkyl carboxylic), neodecanoic, oleic, abietic, pimaric, cyclohexylcarboxylic, cycloheptylcarboxylic, cyclooctylcarboxylic, benzoic, phenyl ethanoic or naphthoic acid, and more preferably copper alkanoate.

3. Use according to Claim 1 or 2 wherein Y is (C₁-C₁₈) alkyl, (C₃-C₁₂) cycloalkyl, (C₇-C₁₀) aralkyl, or (C₇-C₁₀) ring-chlorinated aralkyl; X is hydrogen, methyl or chloro; and X¹ is hydrogen or chloro.

4. Use according to any preceding Claim wherein said one or more 3-isothiazolone is one or more of 4,5-dichloro-2-octyl-3-isothiazolone, 2-octyl-3-isothiazolone, 5-chloro-2-methyl-3-isothiazolone or 2-methyl-3-isothiazolone.

5. Use according to any preceding Claim wherein the ratio of copper salt to isothiazolone is from 1:50 to 50:1.

## Patentansprüche

1. Verwendung eines Kupfersalzes einer oder mehrerer von Alkylcarbonsäuren mit 6 bis 20 Kohlenstoffatomen, Cycloalkylcarbonsäuren mit 6 bis 10 Kohlenstoffatomen oder aromatischen Carbonsäuren mit 6 bis 11 Kohlenstoffatomen als Stabilisator für ein 3-Isothiazolon der Formel 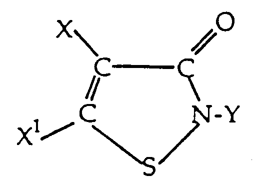 in der Y eine (C₁-C₁₈)-Alkylgruppe oder (C₃-C₁₂)-, vorzugsweise (C₅-C₈)-, Cycloalkylgruppe, jede gegebenenfalls substituiert mit einem oder mehreren von Hydroxyl, Halogen, Cyano, Alkylamino, Dialkylamin, Arylamino, Carboxyl, Carbalkoxy, Alkoxy, Aryloxy, Alkylthio, Haloalkoxy, Cycloalkylamino, Carbamoxy oder Isothiazolonyl, eine unsubstituierte oder mit Halogen substituierte (C₂-C₈)-, vorzugsweise (C₂-C₄)-Alkenylgruppe oder Alkynylgruppe, eine (C₇-C₁₀)-Aralkylgruppe, gegebenenfalls substituiert mit einem oder mehreren von Halogen, (C₁-C₄)-Alkyl oder (C₁-C₄)-Alkoxy, oder eine Arylgruppe, gegebenenfalls substituiert mit einem oder mehreren von Halogen, Nitro, (C₁-C₄)-Alkyl, (C₁-C₄)-Alkyl-acylamino, Carb(C₁-C₄)-alkoxy oder Sulfamyl ist und X und X¹ jeweils unabhängig voneinander Wasserstoff, Chlor oder Methyl sind in einer Metallbearbeitungsflüssigkeit, enthaltend mindestens einen Bestandteil, ausgewählt aus der aus Alkanolamin, Petroleumsulfonatemulgator, einem Borsäureester oder Borsäureamid, einem Korrosionsinhibitor und einer Fettsäure bestehenden Gruppe.

2. Verwendung nach Anspruch 1,
**dadurch gekennzeichnet**,
daß das Kupfersalz ein Salz von Capronsäure, Heptansäure, Octansäure, Decansäure, Dodecansäure, 2-Ethyl-capronsäure, Alkansäure (Mischung von etwa (C₇-C₁₃)-Alkylcarbonsäure), Neodecansäure, Ölsäure, Abietinsäure, Pimarsäure, Cyclohexylcarbonsäure, Cycloheptylcarbonsäure, Cyclooctylcarbonsäure, Benzoesäure, Phenylessigsäure oder Naphtoesäure und vorzugsweise Kupferalkanoat ist.

3. Verwendung nach Anspruch 1 oder 2,
**dadurch gekennzeichnet**,
daß Y (C₁-C₁₈)-Alkyl, (C₃-C₁₂)-Cycloakyl, (C₇-C₁₀)-Aralkyl oder (C₇-C₁₀)ringchloriertes Aralkyl ist, X Wasserstoff, Methyl oder Chlor ist und X¹ Wasserstoff oder Chlor ist.

4. Verwendung nach einem der vorstehenden Ansprüche,
**dadurch gekennzeichnet**,
daß das eine oder die mehreren 3-Isothiazolon(e) eines oder mehrere von 4,5-Dichlor-2-octyl-3-isothiazolon, 2-Octyl-3-isothiazolon, 5-Chlor-2-methyl-3-isothiazolon oder 2-Methyl-3-isothiazolon ist (sind).

5. Verwendung nach einem der vorstehenden Ansprüche,
**dadurch gekennzeichnet**,
daß das Verhältnis von Kupfersalz:Isothiazolon von 1:50 bis 50:1 beträgt.

## Revendications

1. Utilisation d'un sel de cuivre d'un ou plusieurs des composés suivants : acides alkylcarboxyliques ayant de 6 à 20 atomes de carbone, acides cycloalkylcarboxyliques ayant de 6 à 10 atomes de carbone, ou acides carboxyliques aromatiques ayant de 6 à 11 atomes de carbone,
comme stabilisant d'une 3-isothiazolone de formule 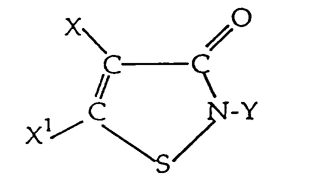 dans laquelle
Y est un radical alkyle en C₁-C₁₈ ou cycloalkyle en C₃-C₁₂, de préférence en C₅-C₈, chacun d'eux étant éventuellement substitué par un ou plusieurs substituants hydroxy, halogéno, cyano, alkylamino, dialkylamino, arylamino, carboxy, carbalcoxy, alcoxy, aryloxy, alkylthio, halogènalcoxy, cycloalkylamino, carbamoxy ou iso-thiazolonyle ; un radical alcényle ou alcynyle en C₂-C₈, de préférence en C₂-C₄, non substitué ou halogéné ; un radical aralkyle en C₇-C₁₀ éventuellement substitué par un ou plusieurs substituants halogéno, alkyle en C₁-C₄ ou alcoxy en C₁-C₄ ; ou un radical aryle éventuellement substitué par un ou plusieurs substituants halogéno, nitro, alkyle en C₁-C₄, (alkyle en C₁-C₄)acylamino, carbo(alcoxy en C₁-C₄) ou sulfamyle ; et
X et X₁, indépendamment l'un de l'autre, sont chacun un hydrogène ou un radical chloro ou méthyle ; dans un fluide pour l'usinage des métaux, comprenant au moins un constituant choisi parmi l'ensemble comprenant les alcanolamines, les émulsifiants de type pétrole-sulfonate, les esters de l'acide borique ou les amides de l'acide borique, les inhibiteurs de corrosion et les acides gras.

2. Utilisation selon la revendication 1, dans laquelle le sel de cuivre est un sel de l'acide hexanoïque, heptanoïque, octanoïque, décanoïque, dodécanoïque, 2-éthylhexanoïque, alcanoïque (mélange d'acides alcanecarboxyliques dont le radical alkyle est approximativement en C₇-C₁₃), néodécanoïque, oléique, abiétique, pimarique, cyclohexylcarboxylique, cycloheptylcarboxylique, cyclooctylcarboxylique, benzoïque, phényléthanoïque ou naphtoïque, et plus particulièrement un alcanoate de cuivre.

3. Utilisation selon la revendication 1 ou 2, dans laquelle Y est un radical alkyle en C₁-C₁₈, cycloalkyle en C₃-C₁₂, aralkyle en C₇-C₁₀ ou aralkyle en C₇-C₁₀ chloré sur le noyau ; X est un hydrogène ou le radical méthyle ou chloro ; et X¹ est un hydrogène ou le radical chloro.

4. Utilisation selon l'une quelconque des revendications précédentes, dans laquelle une ou plusieurs 3-isothiazolones sont représentées par un ou plusieurs des composés suivants : 4,5-dichloro-2-octyl-3-isothiazolone, 2-octyl-3-isothiazolone, 5-chloro-2-méthyl-3-isothiazolone ou 2-méthyl-3-isothiazolone.

5. Utilisation selon l'une quelconque des revendications précédentes, dans laquelle le rapport du sel de cuivre à l'isothiazolone est de 1:50 à 50:1.
